# EUROPEAN PATENT SPECIFICATION

(11) **EP 1 780 071 B1**
(45) Date of publication and mention of the grant of the patent: **07.10.2009**
(21) Application number: 06022579.4
(22) Date of filing: 30.10.2006
(51) Int. Cl.: B60N 2/10, B60N 2/16

(54) **Motor vehicle seat having a tilt and height adjustment device**
Autositz mit einer Vorrichtung zur Neigungs- und Höhenverstellung
Siège de véhicule comportant un dispositif de réglage d'inclinaison et de hauteur

(30) Priority: 28.10.2005 IT MI20052071
(43) Date of publication of application: 02.05.2007
(73) Proprietor: Isringhausen S.p.A., 28060 S. Pietro Mosezzo (IT)
(72) Inventor: Tirapelle, Luigi, 10036 Settimo Torinese (TO) (IT); Gaetani, Luca, 00143 Roma (IT); Basilico, Hernan, 10072 Caselle Torinese (TO) (IT)
(74) Representative: Premru, Rok

(56) References cited:
- DE-A1- 2 006 816
- DE-A1- 2 626 442
- GB-A- 2 141 624
- US-A1- 2001 035 673

## Description

The present invention relates to a height adjustable and tilting motor vehicle seat.

Prior art devices for adjusting tilt and height of motor vehicle seats generally comprise linkage and spring assemblies for opposing the seat lowering action.

US 2001/0035673 A1 discloses a vehicle seat provided with a height-adjusting mechanism comprising two hand levers, each of which is movable around a transverse horizontal axis and controls the pivoting of metal links, the lower ends of which are mounted pivotally to a moving profile section of a slide and the upper ends of which are connected to rigid plates at the side of the cushion.
DE 20 06 816 A1 discloses an adjustable vehicle seat having two rotatable supporting shafts, manually operated by turning handle, which terminates at each end in two parallel pins engaging arrow of gear teeth.
GB 2 141 624 discloses a vehicle seat comprising gear wheels, placed under in the front and rear part of the seat, for selectively adjusting the height of the front and rear part of the seat. The gear wheels are selectively operated by a single oscillating arm.
DE 26 26 442 discloses an adjustable automobile seat which is connected to a base member by means of front and rear L-shaped support brackets. A coupling rod assures that the front and rear support brackets are pivoted simultaneously. A mechanism, comprising eccentric gears, transmit turning movement of a single adjusting handle.

Nevertheless, these tilt and height adjustment devices are still affected by various drawbacks.

Particularly, when raising the seat, the driver or the passenger of the vehicle shall try to reduce his own weight on the seat, by slightly lifting himself off the seat.

Besides, precision adjustment of seat tilt and height is difficult.

A further drawback of prior art adjustable seats is that motorisation thereof encounters considerable technical problems.

The object of this invention is to obviate at least some of prior art drawbacks and particularly the drawbacks set out hereinbefore.

Such object is fulfilled by a motor vehicle seat as defined in the independent claims 1 and 2.

Further advantages may be achieved by the additional features ofthe dependent claims.

A few possible embodiments of motor vehicle seats as defined in the attached claims, will be described hereinafter with reference to the accompanying drawings, where:

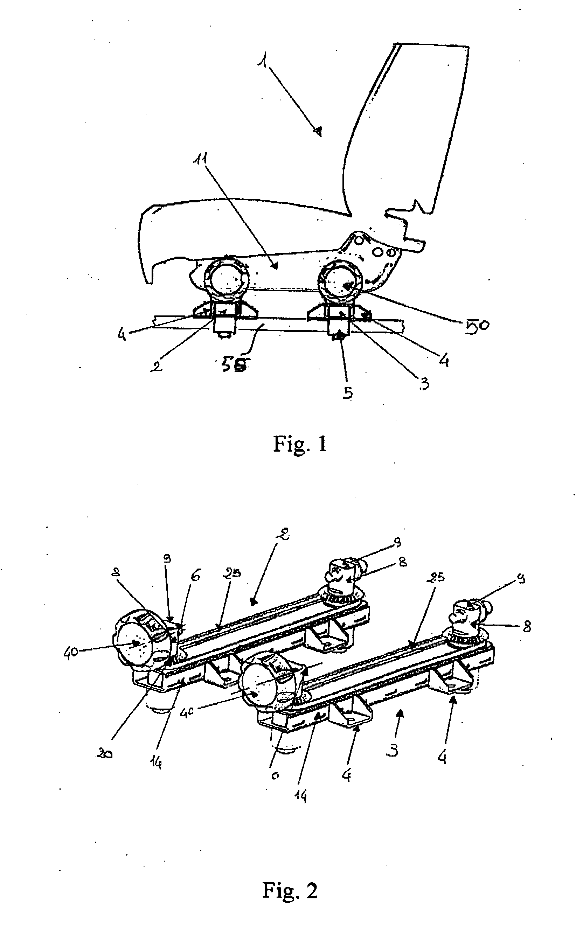

- Fig. 1 is a side view of a seat having a tilt and height adjustment device according to a first embodiment;
- Fig. 2 is a perspective view of the seat tilt and height adjustment device;
- Fig. 3 is a perspective view of a separate unit of the seat tilt and height adjustment device;
- Fig. 4 is a sectional view of a detail of the seat tilt and height adjustment device;
- Fig. 5 is an exploded view of a detail of the seat tilt and height adjustment device.

With reference to the drawings, numeral 1 marks, as a whole, a motor vehicle seat comprising a seat frame 11, a device 2, 3 for adjusting the tilt and height of the seat frame 11, connected with the seat frame 11, and means 4 for anchorage of the adjustment device 2, 3 to a plurality of anchorage points 5.

The seat tilt and height adjustment device 2, 3 has rotary control members 40 and a mechanical transmission system 20.

In the embodiment displayed, the adjustment device 2, 3 comprises two separate units 2, 3.

The two separate units 2, 3 are connected to the front portion and the rear portion respectively of the seat frame 11, and each of these separate units 2, 3 is adapted to adjust the height of the front portion and the rear portion respectively of the seat frame 11.

Rotation of the control means 40 provides, through the mechanical transmission system 20, selective adjustment of the height of the front and/or rear portion of the seat frame, hence of the seat tilt.

According to the illustrated embodiment, each separate unit 2, 3 has its own rotary control member 40 and its own mechanical transmission system 20.

In an alternative embodiment (not shown), each separate unit 2, 3 has its own mechanical transmission system 20, while a single rotary control member is provided, which is capable of selectively or jointly actuating the mechanical transmission systems 20 of each separate adjustment unit 2, 3.

In both embodiments, each separate unit 2, 3 preferably comprises at least two vertically extending and axially movable adjusting pins 8.

Each adjusting pin 8 is coupled to a rotating sleeve 12 and has a free end 9 that is hinged to the seat frame 11.

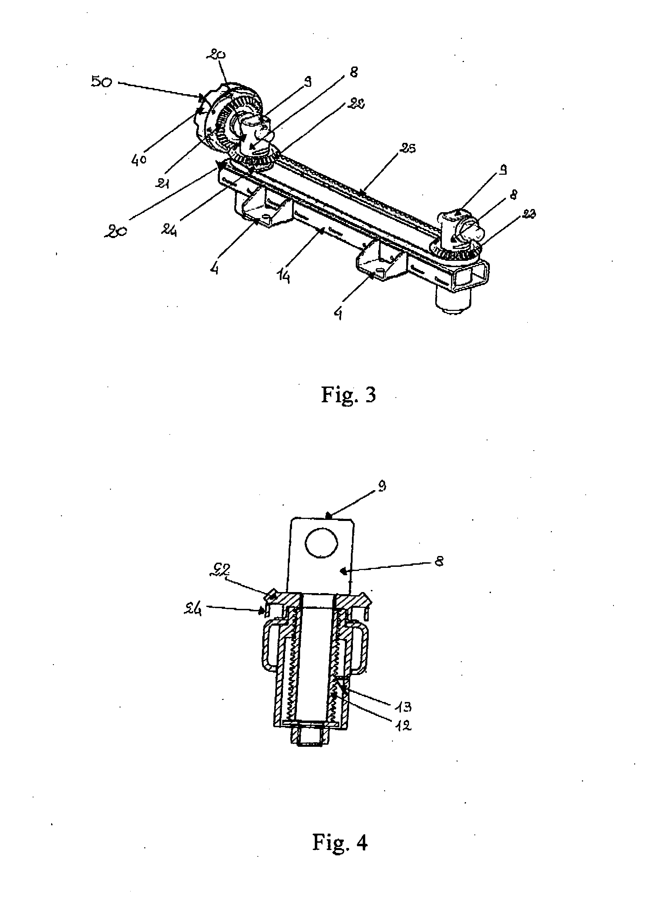

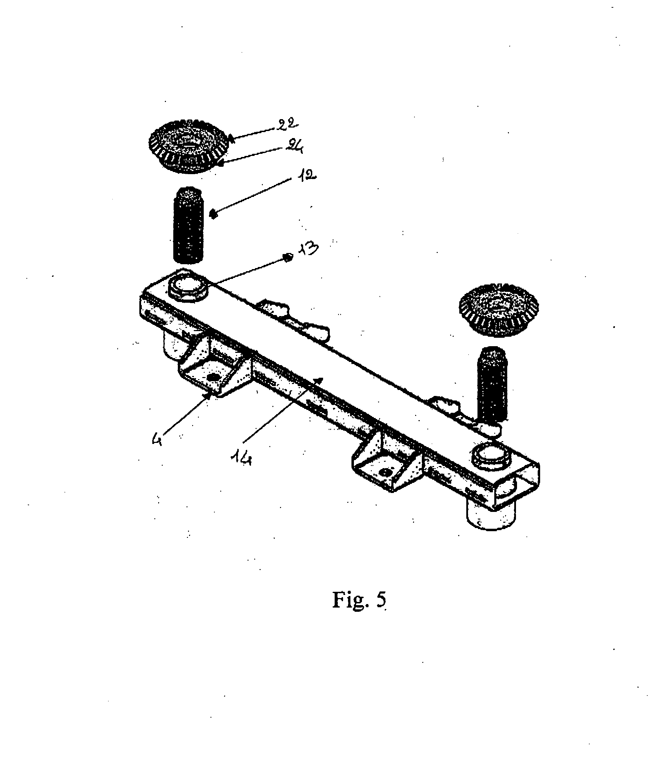

As shown in Fig. 4 and Fig. 5, the rotating sleeve 12 has an externally threaded portion and is in turn coupled to an internally threaded stationary bush 13.

The adjusting pin 8 is rotably coupled to the threaded sleeve 12, that means that rotation of the rotating sleeve 12 in the stationary bush 13 does not cause rotation of the adjusting pin 8.

Particularly, the body of the adjusting pin 8 is fitted in the hole ofthe sleeve 12 with a clearance and, at its free end 9, it has a head of greater diameter than the body of the adjusting pin 8.

Thus, rotation ofthe sleeve 12 provides adjustment of the height of the adjusting pin 8.

The transmission means 20 of each separate unit 2, 3 preferably comprise a pulley 24 coaxial with each rotating sleeve 12 and a toothed belt 25 engaged in each pulley 24.

Each pulley 24 is integral with the rotating sleeve 12.

Particularly, as shown in Fig. 5, an end of the rotating sleeve 12 preferably has a not threaded portion, e.g. of polygonal shape, with a pulley 24 fitted thereon, that can transmit its rotation to the rotating sleeve 12, when coupled.

In the illustrated embodiment, the adjustment means 20 of each separate unit 2, 3 preferably comprise a first bevel gear 21 integral with the rotary control member 40 and a second bevel gear 22 coaxial and integral with one of the sleeves 12 of the separate unit 2, 3.

The two bevel gears 21 and 22 are coupled with each other, so that rotation of the control member 40 is transmitted to the sleeve 12.

According to the embodiment as shown in Fig. 5, the second bevel gear 22 and the pulley 24 form one single body.

Rotation of the first sleeve 12 is in turn transmitted to the other sleeve 12 through the toothed belt 25 and pulleys 24 fitted on each sleeve 12.

Rotation of the sleeves 12 allows synchronous axial adjustment of the adjusting pins 8 coupled thereto, and thence height adjustment of the seat frame portion 11 above the pins 8.

Preferably, the first bevel gear 21 integral with the rotary control member 40 is fitted on a horizontal mounting pin 6, which is further used to hinge the seat frame 11 to one ofthe adjusting pins 8.

Each separate unit 2, 3 preferably comprises a metal section bar 14, which integrally houses the bushes 13 and to whom the means 4 for anchorage of the adjustment device 2, 3 to the anchorage points 5 arc connected.

The anchorage points 5 may be directly created on the vehicle floor.

Otherwise, the anchorage points 5 may be formed on sliders which are inserted in guides 55 oriented longitudinally with respect to the seat portion of the seat 11 to allow seat sliding.

The metal section bar 14 is preferably formed of two welded channels.

The rotary control member 40 of each separate unit 2, 3 may be a manually driven knob 50.

Preferably, the knob 50 is removably connected to the first bevel gear 21.

Otherwise, the rotary control member 40 of each separate unit 2, 3 may be a rotary actuator 51, e.g. a direct current motor (not shown).

## Claims

1. Motor vehicle seat (1) comprising
- a seat frame (11);
- a device (2, 3) for adjusting the tilt and height of said seat frame (11) connected with said seat frame (11), said adjustment device (2, 3) having control means (40), and a mechanical transmission system (20), said tilt and height adjustment device (2, 3) comprising two separate units (2, 3) for selectively adjusting the height of the front part of the seat frame (11) and the height of the rear part of the seat frame (11), each of said separate units (2, 3) having its own rotary control member (40) and its own mechanical transmission system (20),
- means (4) for anchorage of said adjustment device (2, 3) to a plurality of anchorage points (5),
**characterized in that** each of said separate units (2, 3) for adjusting the height of the front part and the rear part of the seat (1) comprises at least two axially adjustable adjusting pins (8), having one free end (9) hinged to said seat frame (11), each adjusting pin (8) being rotably coupled to an externally threaded rotating sleeve (12), that is in turn coupled to an internally threaded stationary bush (13).

2. Motor vehicle seat (1) comprising
- a seat frame (11);
- a device (2, 3) for adjusting the tilt and height of said seat frame (11) connected with said seat frame (11), said adjustment device (2, 3) having control means and a mechanical transmission system (20), said tilt and height adjustment device (2, 3) having two separate units (2, 3) for selectively adjusting the height of the front part of the seat frame (11) and the height of the rear part of the seat frame (11), each of said separate units (2, 3) having its own mechanical transmission system (20), said control means being a single rotary control member which is capable of selectively or jointly actuating the mechanical transmission systems (20) of said two separate units (2, 3),
- means (4) for anchorage of said adjustment device (2, 3) to a plurality of anchorage points (5),
**characterized in that** each of said separate units (2, 3) for adjusting the height of the front part and the rear part of the seat (1) comprises at least two axially adjustable adjusting pins (8), having one free end (9) hinged to said seat frame (11), each adjusting pin (8) being rotably coupled to an externally threaded rotating sleeve (12), that is in turn coupled to an internally threaded stationary bush (13).

3. A seat (1) as claimed in claim 1 or 2, wherein said transmission means (20) comprise a pulley (24) coaxial with each rotating sleeve (12) and a toothed belt (25).

4. A seat (1) as claimed in claim 3 , when dependent on claim 1, wherein said transmission means (20) comprise a first bevel gear (21) integral with said rotary control member (40), and a second bevel gear (22), coaxial and integral with one of said sleeves (12), said first and said second bevel gears (21, 22) being coupled with each other.

5. A seat (1) as claimed in claim 4, when dependent on claim 3, wherein said pulley (24) is integrally joined to said second bevel gear (22).

6. A seat as claimed in claim 4 or 5, wherein said first bevel gear (21) of each adjustment device (2, 3) is fitted on a mounting pin (6), which is further used to hinge said seat frame (11) to one of said adjusting pins (8).

7. A seat (1) as claimed in any one of claims 4 to 6, wherein each of said separate units (2, 3) comprises a metal section bar (14), with which said bushes (13) and said means (4) for anchorage to a plurality of anchorage points (5) are integrally joined.

8. A seat (1) as claimed in any one of claims 4 to 7, wherein said rotary member of each unit (2, 3) is a manually driven knob (50).

9. A seat (1) as claimed in claim 8, wherein each knob (50) is removably connected to said first bevel gear (21).

10. A seat (1) as claimed in any one of claims 4 to 7, wherein said rotary control member (40) of each separate unit (2, 3) is a rotary actuator (51).

11. A seat (1) as claimed in claim 10, wherein said rotary actuator (51) is a direct current motor.

## Patentansprüche

1. Kraftfahrzeugsitz (1), umfassend
- einen Sitzrahmen (11);
- eine mit dem Sitzrahmen (11) verbundene Vorrichtung (2, 3) zum Einstellen der Neigung und der Höhe des Sitzrahmens (11), welche Einstell-Vorrichtung (2, 3) eine Betätigungseinrichtung (40) und ein mechanisches Übertragungssystem (20) hat, welche Neigungs- und Höhen-Einstell-Vorrichtung (2, 3) zwei getrennte Baugruppen (2, 3) zum wahlweisen Einstellen der Höhe des vorderen Teils des Sitzrahmens (11) und der Höhe des hinteren Teils des Sitzrahmens (11) umfasst, wobei jede dieser getrennten Baugruppen (2, 3) seine eigene Drehbetätigungseinrichtung (40) und sein eigenes mechanisches Übertragungssystem (20) hat,
- Mittel (4) zum Befestigen der genannten Einstell-Vorrichtung (2, 3) an einer Mehrzahl von Befestigungspunkten (5),
**dadurch gekennzeichnet, dass** jeder der getrennten Baugruppen (2, 3) zum Einstellen der Höhe des vorderen Teils und des hinteren Teils des Sitzes (1) mindestens zwei axial verstellbare Stellbolzen (8) aufweist, die ein verschwenkbar mit dem genannten Sitzrahmen (11) verbundenes freies Ende (9) haben, wobei jeder Stellbolzen (8) drehbar mit einer ein Außengewinde aufweisenden Drehhülse (12) gekoppelt ist, die wiederum mit einem ein Innengewinde aufweisenden, feststehenden Gewindebuchse (13) gekoppelt ist.

2. Kraftfahrzeugsitz (1), umfassend
- einen Sitzrahmen (11);
- eine mit dem Sitzrahmen (11) verbundene Vorrichtung (2, 3) zum Einstellen der Neigung und der Höhe des Sitzrahmens (11), welche Einstell-Vorrichtung (2, 3) eine Betätigungseinrichtung und ein mechanisches Übertragungssystem (20) hat, welche Neigungs- und Höhen-Einstell-Vorrichtung (2, 3) zwei getrennte Baugruppen (2, 3) zum wahlweisen Einstellen der Höhe des vorderen Teils des Sitzrahmens (11) und des hinteren Teils des Sitzrahmens (11) hat, wobei jede dieser getrennten Baugruppen (2, 3) sein eigenes mechanisches Übertragungssystem (20) hat, welche Betätigungseinrichtung eine einzelne Drehbetätigungseinrichtung (40) ist, mittels der die mechanischen Übertragungssysteme (20) der beiden getrennte Baugruppen (2, 3) wahlweise oder zusammen antreibbar sind,
- Mittel (4) zum Befestigen der genannten Einstell-Vorrichtung (2, 3) an einer Mehrzahl von Befestigungspunkten (5),
**dadurch gekennzeichnet, dass** jeder der getrennten Baugruppen (2, 3) zum Einstellen der Höhe des vorderen Teils und des hinteren Teils des Sitzes (1) mindestens zwei axial verstellbare Stellbolzen (8) aufweist, die ein verschwenkbar mit dem genannten Sitzrahmen (11) verbundenes freies Ende (9) haben, wobei jeder Stellbolzen (8) drehbar mit einer ein Außengewinde aufweisenden Drehhülse (12) gekoppelt ist, die wiederum mit einem ein Innengewinde aufweisenden, feststehenden Gewindebuchse (13) gekoppelt ist.

3. Kraftfahrzeugsitz (1) nach Anspruch 1 oder 2, wobei die genannten Übertragungsmittel (20) eine zu der Drehhülse (12) koaxiale Riemenscheibe (24) und einen Zahnriemen (25) aufweist.

4. Kraftfahrzeugsitz (1) nach Anspruch 3, wenn er auf Anspruch 1 rückbezogen ist, wobei die genannten Übertragungsmittel (20) ein in die besagte Drehbetätigungseinrichtung (40) integriertes erstes Kegelradgetriebe (21) und ein zweites Kegelradgetriebe (22) aufweisen, das koaxial in eine der genannten Hülsen (12) integriert ist, welches erste und zweite Kegelradgetriebe (21, 22) miteinander gekoppelt sind.

5. Kraftfahrzeugsitz (1) nach Anspruch 4, wenn er auf Anspruch 3 rückbezogen ist, wobei die genannte Riemenscheibe (24) integral mit dem zweiten Kegelradgetriebe (22) verbunden ist.

6. Kraftfahrzeugsitz (1) nach Anspruch 4 oder 5, wobei das erste Kegelradgetriebe (21) jeder Baugruppe (2, 3) auf einem Montagebolzen (6) angebracht ist, der weiterhin dazu dient, den Sitzrahmen (11) verschwenkbar mit einem der genannten Stellbolzen (8) zu verbinden.

7. Kraftfahrzeugsitz (1) nach einem der Ansprüche 4 bis 6, wobei jede der getrennten Baugruppen (2, 3) ein Metallprofilstab (14) aufweist, mit der die genannten Gewindebuchsen (13) und die genannten Mittel (4) zum Befestigen an einer Mehrzahl von Befestigungspunkten (5) integral miteinander verbunden sind.

8. Kraftfahrzeugsitz (1) nach einem der Ansprüche 4 bis 7, wobei die besagte Dreheinrichtung jeder Baugruppe (2, 3) ein manuell antreibbarer Drehknopf (50) ist.

9. Kraftfahrzeugsitz (1) nach Anspruch 8, wobei jeder Drehknopf (50) lösbar mit dem genannten ersten Kegelradgetriebe (21) verbunden ist.

10. Kraftfahrzeugsitz (1) nach einem der Ansprüche 4 bis 7, wobei die besagte Drehbetätigungseinrichtung (40) jeder getrennten Baugruppe (2, 3) ein Drehantrieb (51) ist.

11. Kraftfahrzeugsitz (1) nach Anspruch 10, wobei der genannte Drehantrieb (51) ein Gleichstrommotor ist.

## Revendications

1. Siège de véhicule automobile (1) comprenant :
- une membrure de siège (11),
- un dispositif (2, 3) pour le réglage de l'inclinaison et la hauteur de ladite membrure de siège (11) lié avec ladite membrure de siège (11), ledit dispositif de réglage (2, 3) ayant des moyens de commande (40) et un système de transmission mécanique (20), ledit dispositif de réglage de l'inclinaison et de la hauteur (2, 3) comprenant deux unités séparées (2, 3) pour le réglage sélectif de la hauteur de la partie avant de la membrure de siège (11) et de la hauteur de la partie arrière de la membrure de siège (11), chacune desdites unités séparées (2, 3) ayant son propre élément de commande rotatoire (40) et son propre système de transmission mécanique (20),
- des moyens (4) d'ancrage dudit dispositif de réglage (2, 3) à une pluralité de points d'ancrage (5),
**caractérisé en ce que** chacune desdites unités séparées (2, 3) pour le réglage de la hauteur de la partie avant et de la partie arrière du siège (1) comprend au moins deux goupilles de réglage axialement réglables (8), ayant une extrémité libre (9) à charnière liée à ladite membrure de siège (11), chaque goupille de réglage (8) étant assemblée pivotante à un manchon de rotation fileté extérieurement (12) qui est à son tour assemblé au boîtier fixe taraudé intérieurement (13).

2. Siège de véhicule automobile (1) comprenant :
- une membrure de siège (11),
- un dispositif (2, 3) pour le réglage de l'inclinaison et de la hauteur de ladite membrure de siège (11) lié avec ladite membrure de siège (11), ledit dispositif de réglage (2, 3) ayant des moyens de commande et un système de transmission mécanique (20), ledit dispositif de réglage de l'inclinaison et de la hauteur (2, 3) ayant deux unités séparées (2, 3) pour le réglage sélectif de la hauteur de la partie avant de la membrure de siège (11) et de la hauteur de la partie arrière de la membrure de siège (11), chacune desdites unités séparées (2, 3) ayant son propre système de transmission mécanique (20), ledit moyens de commande étant un simple élément de commande rotatoire qui est capable de mettre en marche le système de transmission mécanique (20) globalement ou par sélection desdites deux unités séparées (2, 3);
- des moyens (4) d'ancrage dudit dispositif de réglage (2, 3) à une pluralité de points d'ancrage (5),
**caractérisé en ce que** chacune desdites unités séparées (2, 3) pour le réglage de la hauteur de la partie avant et de la partie arrière du siège (1) comprend au moins deux goupilles de réglage axialement réglables (8), ayant une extrémité libre (9) à charnière à liée à ladite membrure de siège (11), chaque goupille de réglage (8) étant fixée pivotante à un manchon de rotation fileté extérieurement (12) qui est à son tour assemblé au boîtier fixe taraudé intérieurement (13).

3. Siège (1) tel que revendiqué selon l'une des revendications 1 ou 2, dans lequel lesdits moyens de transmission (20) comprennent une poulie (24) coaxiale avec chaque manchon de rotation (12) et une ceinture dentée (25).

4. Siège (1) tel que revendiqué selon la revendication 3, dépendante de la revendication 1, dans lequel lesdits moyens de transmission (20) comprennent un premier pignon conique (21) formant un tout avec ledit élément de commande rotatoire (40) et un second pignon conique (22), coaxial formant un tout avec un desdits manchons (12), ledit premier et ledit second pignons coniques (21, 22) étant accouplé l'un par rapport à l'autre.

5. Siège (1) tel que revendiqué selon la revendication 4, dépendante de la revendication 3, dans lequel ladite poulie (24) est totalement liée audit second pignon conique (22).

6. Siège (1) tel que revendiqué selon l'une des revendications 4 ou 5, dans lequel ledit premier pignon conique (21) de chaque dispositif de réglage (2, 3) est adapté sur une goupille montage (6), qui est en outre utilisée comme charnière de ladite membrure de siège (11) avec une desdites goupilles de réglage (8).

7. Siège(1) tel que revendiqué selon l'une quelconque des revendications 4 à 6, dans lequel chacune desdites unités séparées (2, 3) comprend une barre de section métallique (14), avec laquelle lesdits boîtiers (13) et lesdits moyens (4) pour l'ancrage à une pluralité de points d'ancrage (5) sont intégralement liés.

8. Siège (1) tel que revendiqué selon l'une quelconque des revendications 4 à 7, dans lequel l'élément rotatoire de chaque unité (2, 3) est un bouton d'entraînement manuel (50).

9. Siège (1) tel que revendiqué selon la revendication 8, dans lequel chaque bouton (50) est connecté décrochable audit premier pignon conique (21).

10. Siège (1) tel que revendiqué selon l'une quelconque des revendications 4 à 7, dans lequel ledit élément de commande rotatoire (40) de chaque unité séparée (2, 3) est un déclencheur tournant (51).

11. Siège (1) tel que revendiqué selon la revendication 10, dans lequel ledit déclencheur tournant (51) est un moteur électrique à courant continu.
